# EUROPÄISCHE PATENTANMELDUNG

(11) **EP 3 098 874 A1**
(43) Veröffentlichungstag der Anmeldung: **30.11.2016**
(21) Anmeldenummer: 15169803.2
(22) Anmeldetag: 29.05.2015
(51) Int. Cl.: H01M 2/02

(54) **ZELLENGEHÄUSE FÜR EINE BATTERIEZELLE, BATTERIEZELLE UND VERFAHREN ZUR HERSTELLUNG EINES ZELLENGEHÄUSES FÜR EINE BATTERIEZELLE**

(71) Anmelder: Lithium Energy and Power GmbH & Co. KG, 70469 Stuttgart (DE)
(72) Erfinder: Klemen, Thomas, 74360 Ilsfeld / Auenstein (DE); Berg, Anselm, 71640 Ludwigsburg (DE)
(74) Vertreter: Bee, Joachim

(57) **Zusammenfassung**

Die Erfindung betrifft ein Zellengehäuse (3) für eine Batteriezelle (2), umfassend mindestens ein erstes Gehäuseteil (61) und ein zweites Gehäuseteil (62), wobei die Gehäuseteile (61, 62) einen aus Kunststoff gefertigten Grundkörper (52) mit einer metallischen Beschichtung (50) aufweisen. Dabei sind die Gehäuseteile (61, 62) an Nahtstellen (70) mittels Löten miteinander verbunden. Die Erfindung betrifft auch eine Batteriezelle (2), welche mindestens ein erfindungsgemäßes Zellengehäuse (3) umfasst. Die Erfindung betrifft ferner eine Verfahren zur Herstellung eines Zellengehäuses (3) für eine Batteriezelle (2), wobei auf Grundkörper (52) mindestens eines ersten Gehäuseteils (61) und eines zweiten Gehäuseteils (62), welche aus Kunststoff gefertigt sind, zunächst eine metallische Beschichtung (50) aufgebracht wird, und anschließend die Gehäuseteile (61, 62) mittels Löten an Nahtstellen (70) miteinander verbunden werden

## Beschreibung

Die Erfindung betrifft ein Zellengehäuse für eine Batteriezelle, welches mindestens ein erstes Gehäuseteil und ein zweites Gehäuseteil umfasst, wobei die Gehäuseteile einen aus Kunststoff gefertigten Grundkörper mit einer metallischen Beschichtung aufweisen. Die Erfindung betrifft auch eine Batteriezelle, die ein erfindungsgemäßes Zellengehäuse umfasst, sowie ein Verfahren zur Herstellung eines erfindungsgemäßen Zellengehäuses für eine Batteriezelle.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. In das Aktivmaterial der Anode sind Lithiumatome eingelagert. Beim Betrieb der Batteriezelle, also bei einem Entladevorgang, fließen Elektronen in einem äußeren Stromkreis von der Anode zur Kathode. Innerhalb der Batteriezelle wandern Lithiumionen bei einem Entladevorgang von der Anode zur Kathode.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die Elektroden können auch zu einem Elektrodenstapel übereinander geschichtet sein. Eine Batteriezelle umfasst in der Regel eine oder mehrere Elektrodenwickel oder Elektrodenstapel.

Die beiden Elektroden des Elektrodenwickels oder des Elektrodenstapels werden mittels Kollektoren elektrisch mit Polen der Batteriezelle, welche auch als Terminals bezeichnet werden, verbunden. Die Elektroden und der Separator sind von einem beispielsweise flüssigen Elektrolyt umgeben. Der Elektrolyt ist für die Lithiumionen leitfähig und ermöglicht den Transport der Lithiumionen zwischen den Elektroden.

Die Batteriezelle weist ferner ein Zellengehäuse auf, welches beispielsweise prismatisch, insbesondere quaderförmig, ausgestaltet und druckfest ausgebildet ist. Die Terminals befinden sich dabei außerhalb des Zellengehäuses. Nach dem Verbinden der Elektroden mit den Terminals wird der Elektrolyt in das Zellengehäuse gefüllt.

Ein gattungsgemäßes Zellengehäuse für eine Batteriezelle sowie ein entsprechendes Herstellverfahren sind aus der DE 10 2012 206 075 A1 bekannt. Das Zellengehäuse ist dabei aus Kunststoff gefertigt und umfasst einen Grundkörper, der mit einem Gehäusedeckel verschlossen wird. Auf dem Grundkörper ist dabei eine Dampfsperrschicht aufgebracht, welche insbesondere metallisch ausgebildet ist.

Aus der DE 10 2012 209 349 A1 ist ein Gehäuse für eine Batteriezelle bekannt, welches mehrere Seitenwände, einen Gehäusedeckel sowie einen Gehäuseboden umfasst. Die einzelnen Teile des Gehäuses werden beispielsweise mittels Löten miteinander verbunden.

In der DE 10 2011110 814 A1 ist ein Gehäuse für eine Batteriezelle offenbart, welches einen Zellbecher und einen Zelldeckel umfasst. Der Zellbecher und der Zelldeckel sind aus einem metallischen Material gefertigt und beispielsweise mittels Löten miteinander verbunden.

Aus der DE 10 2011110 815 A1 geht ein Gehäuse für eine Batteriezelle hervor, welches mehrteilig ausgebildet ist. Die einzelnen Teile des Gehäuses sind dabei metallisch ausgebildet und miteinander verlötet.

### Offenbarung der Erfindung

Es wird ein Zellengehäuse für eine Batteriezelle vorgeschlagen. Das Zellengehäuse umfasst dabei mindestens ein erstes Gehäuseteil und ein zweites Gehäuseteil, wobei die Gehäuseteile einen aus Kunststoff gefertigten Grundkörper mit einer metallischen Beschichtung aufweisen.

Erfindungsgemäß sind die Gehäuseteile dabei an Nahtstellen mittels Löten miteinander verbunden. Im Gegensatz zu anderen Verbindungsverfahren, insbesondere Schweißen, entstehen beim Löten keine Rückstände oder Partikel, beispielsweise Schweißspritzer. Auch gestattet Löten eine dichte Verbindung der Gehäuseteile miteinander, und das Zellengehäuse erreicht eine verhältnismäßig hohe Stabilität.

Gemäß einer vorteilhaften Weiterbildung der Erfindung weisen das erste Gehäuseteil und das zweite Gehäuseteil Nahtstellen mit zueinander komplementären Konturen auf. Beispielweise sind die Gehäuseteile als Nut und Feder ausgeführt. Dadurch ist die korrekte Ausrichtung der Gehäuseteile zueinander vor dem Lötvorgang vereinfacht.

Die metallische Beschichtung ist vorzugsweise auch an den Nahtstellen der Gehäuseteile aufgebracht. Somit sind die metallischen Beschichtungen der Gehäuseteile unmittelbar miteinander verlötbar.

Bevorzugt enthält die metallische Beschichtung Aluminium und/oder Zink. Aluminium und/oder Zink sind verhältnismäßig gut zu löten und stellen eine gute Diffusionsbarriere für Elektrolyt sowie für Wasser dar.

Es wird auch eine Batteriezelle vorgeschlagen, welche mindestens ein erfindungsgemäßes Zellengehäuse umfasst.

Ferner wird ein Verfahren zur Herstellung eines Zellengehäuses für eine Batteriezelle vorgeschlagen. Dabei wird auf Grundkörper mindestens eines ersten Gehäuseteils und eines zweiten Gehäuseteils, wobei die Grundkörper aus Kunststoff gefertigt sind, zunächst eine metallische Beschichtung aufgebracht, und anschließend werden dann die Gehäuseteile mittels Löten an Nahtstellen miteinander verbunden.

Gemäß einer vorteilhaften Ausgestaltung des Verfahrens wird die metallische Beschichtung mittels Bedampfen auf den Grundkörper des ersten Gehäuseteils und/oder des zweiten Gehäuseteils aufgebracht.

Gemäß einer anderen vorteilhaften Ausgestaltung des Verfahrens wird die metallische Beschichtung mittels Lichtbogenspritzen auf den Grundkörper des ersten Gehäuseteils und/oder des zweiten Gehäuseteils aufgebracht.

Gemäß einer weiteren vorteilhaften Ausgestaltung des Verfahrens wird die metallische Beschichtung mittels eines galvanischen Prozesses, insbesondere Galvanotechnik, auf den Grundkörper des ersten Gehäuseteils und/oder des zweiten Gehäuseteils aufgebracht.

Eine erfindungsgemäße Batteriezelle findet vorteilhaft Verwendung in einem Elektrofahrzeug (EV), in einem Hybridfahrzeug (HEV), in einem Plug-In-Hybridfahrzeug (PHEV), oder in einem Consumer-Elektronik-Produkt. Unter Consumer-Elektronik-Produkten sind insbesondere Mobiltelefone, Tablet-PCs oder Notebooks zu verstehen.

### Vorteile der Erfindung

Durch die erfindungsgemäße Ausgestaltung des Zellengehäuses der Batteriezelle ist das Zellengehäuse diffusionsdicht verschlossen. Somit kann kein innerhalb des Zellgehäuses vorhandener Elektrolyt aus dem Zellengehäuse heraus entweichen, und von Außen kann kein Wasser in das Zellengehäuse eindringen. Dabei stellt insbesondere die metallische Beschichtung eine Diffusionsbarriere dar, wobei auch die verlöteten Nahtstellen diffusionsdicht ausgeführt sind.

Ein erfindungsgemäßes Zellengehäuse ist dabei verhältnismäßig kostengünstig herstellbar. Ferner bleibt die Isolationseigenschaft des Kunststoffs auch über die Nahtstellen erhalten. Auch verbleiben verhältnismäßig viele Freiheitsgrade bei der Konstruktion eines Zellengehäuses.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Schnitts durch eine Batteriezelle,
- Figur 2: eine schematische Explosionsdarstellung einer ersten Ausführungsform eines Zellengehäuses,
- Figur 3: eine schematische Explosionsdarstellung einer zweiten Ausführungsform eines Zellengehäuses,
- Figur 4: eine schematische Darstellung einer ersten Variante von Nahtstellen,
- Figur 5: eine schematische Darstellung einer zweiten Variante von Nahtstellen und
- Figur 6: eine schematische Darstellung einer dritten Variante von Nahtstellen.

### Ausführungsformen der Erfindung

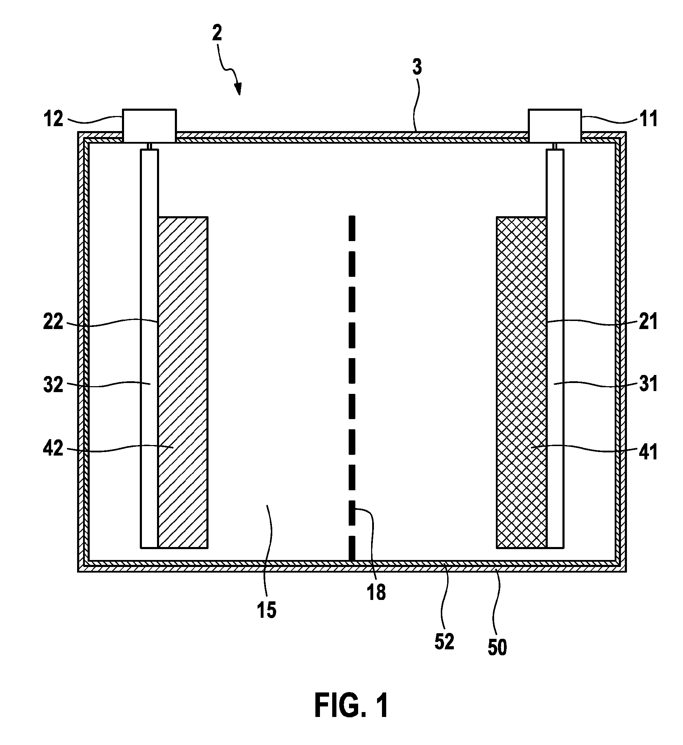

Ein Schnitt durch eine Batteriezelle 2 ist in Figur 1 schematisch dargestellt. Die Batteriezelle 2 umfasst ein Zellengehäuse 3. Das Zellengehäuse 3 umfasst mehrere, hier nicht separat dargestellte Gehäuseteile 61, 62, 63, welche jeweils einen aus Kunststoff gefertigten Grundkörper 52 aufweisen, wobei jeder Grundkörper 52 eines Gehäuseteils 61, 62, 63 mit einer metallischen Beschichtung 50 versehen ist. Die Beschichtung 50 enthält vorliegend Aluminium. Aber auch andere Werkstoffe für Beschichtung 50, insbesondere Zink, sind denkbar.

Dabei sind die Grundkörper 52 der Gehäuseteile 61, 62, 63 dem Innenraum des Zellengehäuses 3 zugewandt. Die metallischen Beschichtungen 50 der Gehäuseteile 61, 62, 63 weisen nach außen.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche des Zellengehäuses 3 angeordnet. In einer alternativen Ausführungsform der Batteriezelle 2 können die beiden Terminals 11, 12 auch auf gegenüberliegenden Seiten des Zellengehäuses 3 angeordnet sein.

Innerhalb des Zellengehäuses 3 der Batteriezelle 2 ist ein Elektrodenwickel angeordnet, welcher zwei Elektroden, nämlich eine Anode 21 und eine Kathode 22, aufweist. Die Anode 21 und die Kathode 22 sind jeweils folienartig ausgeführt und unter Zwischenlage eines Separators 18 zu dem Elektrodenwickel gewickelt. Es ist auch denkbar, dass mehrere Elektrodenwickel in dem Zellengehäuse 3 vorgesehen sind. Anstelle des Elektrodenwickels kann auch beispielsweise ein Elektrodenstapel vorgesehen sein.

Die Anode 21 umfasst ein anodisches Aktivmaterial 41, welches folienartig ausgeführt ist. Das anodische Aktivmaterial 41 weist als Grundstoff Silizium oder eine Silizium enthaltende Legierung auf. Die Anode 21 umfasst ferner einen Stromableiter 31, welcher ebenfalls folienartig ausgebildet ist. Das anodische Aktivmaterial 41 und der Stromableiter 31 sind flächig aneinander gelegt und miteinander verbunden.

Der Stromableiter 31 der Anode 21 ist elektrisch leitfähig ausgeführt und aus einem Metall gefertigt, beispielsweise aus Kupfer. Der Stromableiter 31 der Anode 21 ist elektrisch mit dem negativen Terminal 11 der Batteriezelle 2 verbunden.

Die Kathode 22 umfasst ein kathodisches Aktivmaterial 42, welches folienartig ausgeführt ist. Das kathodische Aktivmaterial 42 weist als Grundstoff ein Metalloxid auf, beispielsweise Lithium-Kobalt-Oxid (LiCoO₂). Die Kathode 22 umfasst ferner einen Stromableiter 32, welcher ebenfalls folienartig ausgebildet ist. Das kathodische Aktivmaterial 42 und der Stromableiter 32 sind flächig aneinander gelegt und miteinander verbunden.

Der Stromableiter 32 der Kathode 22 ist elektrisch leitfähig ausgeführt und aus einem Metall gefertigt, beispielsweise aus Aluminium. Der Stromableiter 32 der Kathode 22 ist elektrisch mit dem positiven Terminal 12 der Batteriezelle 2 verbunden.

Die Anode 21 und die Kathode 22 sind durch den Separator 18 voneinander getrennt. Der Separator 18 ist ebenfalls folienartig ausgebildet. Der Separator 18 ist elektrisch isolierend ausgebildet, aber ionisch leitfähig, also für Lithiumionen durchlässig.

Das Zellengehäuse 3 der Batteriezelle 2 ist mit einem flüssigen Elektrolyt 15 gefüllt. Der flüssige Elektrolyt 15 umgibt dabei die Anode 21, die Kathode 22 und den Separator 18. Auch der Elektrolyt 15 ist ionisch leitfähig. Das Zellengehäuse 3 der Batteriezelle 2 ist diffusionsdicht verschlossen. Somit kann kein innerhalb des Zellgehäuses 3 vorhandener Elektrolyt 15 aus dem Zellengehäuse 3 entweichen, und von Außen kann kein Wasser in das Zellengehäuse 3 eindringen.

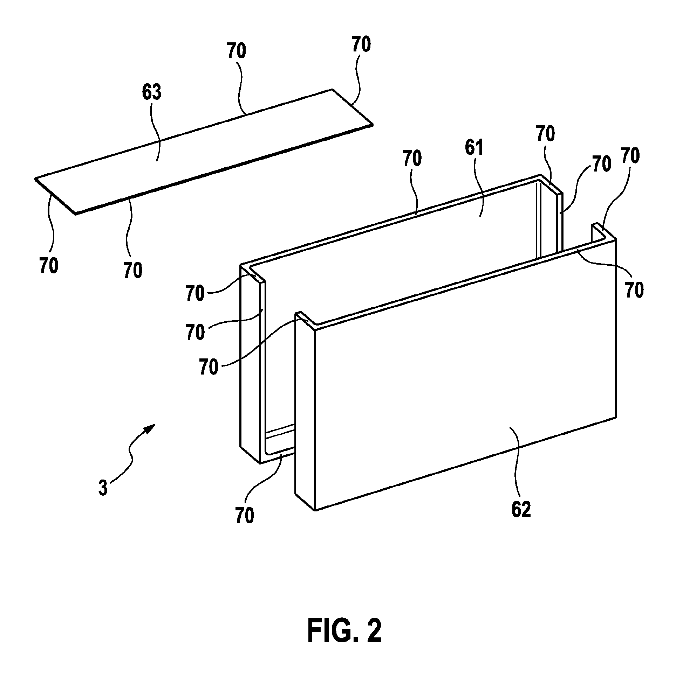

Figur 2 zeigt eine schematische Explosionsdarstellung einer ersten Ausführungsform eines Zellengehäuses 3. Das Zellengehäuse 3 gemäß der ersten Ausführungsform ist dabei prismatisch, vorliegend quaderförmig, ausgebildet.

Das Zellengehäuse 3 gemäß der ersten Ausführungsform weist ein erstes Gehäuseteil 61, ein zweites Gehäuseteil 62 und ein drittes Gehäuseteil 63 auf. Die Gehäuseteile 61, 62, 63 weisen jeweils einen, hier nicht explizit dargestellten, aus Kunststoff gefertigten Grundkörper 52 auf. Die Grundkörper 52 der Gehäuseteile 61, 62, 63 sind dabei mit einer, hier ebenfalls nicht explizit dargestellten, metallischen Beschichtung 50 versehen.

Das erste Gehäuseteil 61 und das zweite Gehäuseteil 62 bilden zusammen einen Behälter mit einer nach oben weisenden Öffnung. Besagte Öffnung ist dabei durch das dritte Gehäuseteil 63, welches als Gehäusedeckel wirkt, verschlossen. Das dritte Gehäuseteil 63 weist dabei einen rechteckigen Querschnitt auf.

Es ist auch denkbar, das Zellengehäuse 3 aus zwei Halbschalen zusammenzusetzen. In diesem Fall ist kein Gehäusedeckel erforderlich. Ferner ist es denkbar, das Zellengehäuse 3 aus einem einteiligen Behälter und einem Gehäusedeckel zusammenzusetzen.

Die Gehäuseteile 61, 62, 63 des Zellengehäuses 3 gemäß der ersten Ausführungsform weisen mehrere Nahtstellen 70 auf, an welchen die Gehäuseteile 61, 62, 63 miteinander verlötet sind. Insbesondere die Nahtstellen 70 sind mit der, hier nicht explizit dargestellten, metallischen Beschichtung 50 versehen.

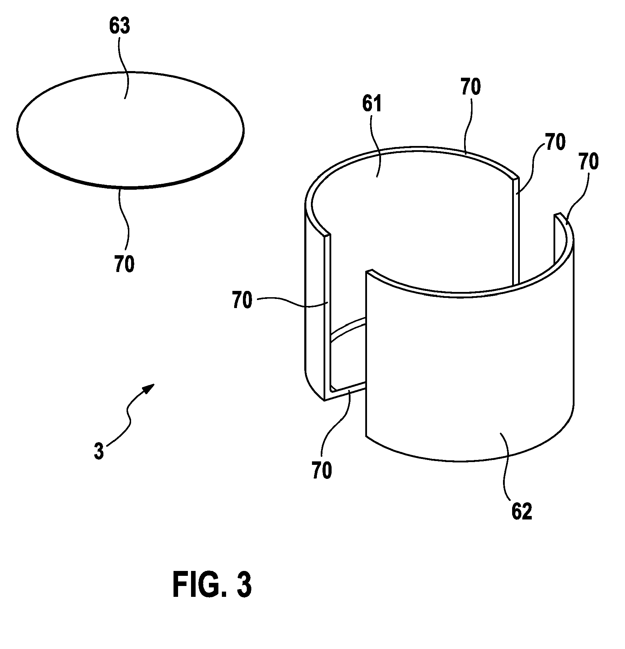

Figur 3 zeigt eine schematische Explosionsdarstellung einer zweiten Ausführungsform eines Zellengehäuses 3. Das Zellengehäuse 3 gemäß der zweiten Ausführungsform ist dabei kreiszylindrisch ausgebildet.

Das Zellengehäuse 3 gemäß der zweiten Ausführungsform weist ein erstes Gehäuseteil 61, ein zweites Gehäuseteil 62 und ein drittes Gehäuseteil 63 auf. Die Gehäuseteile 61, 62, 63 weisen jeweils einen, hier nicht explizit dargestellten, aus Kunststoff gefertigten Grundkörper 52 auf. Die Grundkörper 52 der Gehäuseteile 61, 62, 63 sind dabei mit einer, hier ebenfalls nicht explizit dargestellten, metallischen Beschichtung 50 versehen.

Das erste Gehäuseteil 61 und das zweite Gehäuseteil 62 bilden zusammen einen Behälter mit einer nach oben weisenden Öffnung. Besagte Öffnung ist dabei durch das dritte Gehäuseteil 63, welches als Gehäusedeckel wirkt, verschlossen. Das dritte Gehäuseteil 63 weist dabei einen kreisrunden Querschnitt auf.

Es ist auch denkbar, das Zellengehäuse 3 aus zwei Halbschalen zusammenzusetzen. In diesem Fall ist kein Gehäusedeckel erforderlich. Ferner ist es denkbar, das Zellengehäuse 3 aus einem einteiligen Behälter und einem Gehäusedeckel zusammenzusetzen.

Die Gehäuseteile 61, 62, 63 des Zellengehäuses 3 gemäß der zweiten Ausführungsform weisen mehrere Nahtstellen 70 auf, an welchen die Gehäuseteile 61, 62, 63 miteinander verlötet sind. Insbesondere die Nahtstellen 70 sind mit der, hier nicht explizit dargestellten, metallischen Beschichtung 50 versehen.

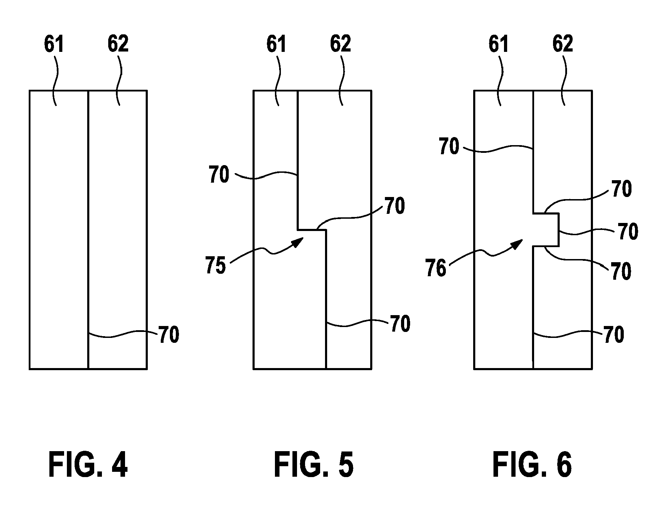

In Figur 4 ist eine schematische Darstellung einer ersten Variante von Nahtstellen 70 gezeigt. Die gezeigten Nahtstellen 70 befinden sich dabei an dem ersten Gehäuseteil 61 und an dem zweiten Gehäuseteil 62 des Zellengehäuses 3 gemäß der ersten Ausführungsform, welches vorliegend quaderförmig ausgebildet ist.

Dabei ist die Unterseite des Behälters, der durch das erste Gehäuseteil 61 und das zweite Gehäuseteil 62 gebildet ist, gezeigt. Die Unterseite ist der nach oben weisenden Öffnung sowie dem als Gehäusedeckel wirkenden dritten Gehäuseteil 63 abgewandt.

Die Nahtstellen 70 der Gehäuseteile 61, 62 weisen dabei zueinander komplementäre Konturen auf. Vorliegend liegen die Nahtstellen 70 plan aneinander.

In Figur 5 ist eine schematische Darstellung einer zweiten Variante von Nahtstellen 70 gezeigt. Die gezeigten Nahtstellen 70 befinden sich dabei an dem ersten Gehäuseteil 61 und an dem zweiten Gehäuseteil 62 des Zellengehäuses 3 gemäß der ersten Ausführungsform, welches vorliegend quaderförmig ausgebildet ist.

Dabei ist die Unterseite des Behälters, der durch das erste Gehäuseteil 61 und das zweite Gehäuseteil 62 gebildet ist, gezeigt. Die Unterseite ist der nach oben weisenden Öffnung sowie dem als Gehäusedeckel wirkenden dritten Gehäuseteil 63 abgewandt.

Die Nahtstellen 70 der Gehäuseteile 61, 62 weisen dabei zueinander komplementäre Konturen auf. Vorliegend weisen die Nahtstellen 70 einen Überlappungsbereich 75 auf.

In Figur 6 ist eine schematische Darstellung einer dritten Variante von Nahtstellen 70 gezeigt. Die gezeigten Nahtstellen 70 befinden sich dabei an dem ersten Gehäuseteil 61 und an dem zweiten Gehäuseteil 62 des Zellengehäuses 3 gemäß der ersten Ausführungsform, welches vorliegend quaderförmig ausgebildet ist.

Dabei ist die Unterseite des Behälters, der durch das erste Gehäuseteil 61 und das zweite Gehäuseteil 62 gebildet ist, gezeigt. Die Unterseite ist der nach oben weisenden Öffnung sowie dem als Gehäusedeckel wirkenden dritten Gehäuseteil 63 abgewandt.

Die Nahtstellen 70 der Gehäuseteile 61, 62 weisen dabei zueinander komplementäre Konturen auf. Vorliegend weisen die Nahtstellen 70 einen Nut-Feder-Bereich 76 auf.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Zellengehäuse (3) für eine Batteriezelle (2), umfassend mindestens ein erstes Gehäuseteil (61)
und ein zweites Gehäuseteil (62),
wobei die Gehäuseteile (61, 62) einen aus Kunststoff gefertigten Grundkörper (52)
mit einer metallischen Beschichtung (50) aufweisen,
**dadurch gekennzeichnet, dass**
die Gehäuseteile (61, 62) an Nahtstellen (70) mittels Löten miteinander verbunden sind.

2. Zellengehäuse (3) nach Anspruch 1, **dadurch gekennzeichnet, dass** das erste Gehäuseteil (61) und das zweite Gehäuseteil (62) Nahtstellen (70) mit zueinander komplementären Konturen aufweisen.

3. Zellengehäuse (3) nach einem der vorstehenden Ansprüche, **dadurch gekennzeichnet, dass**
die metallische Beschichtung (50) an den Nahtstellen (70) aufgebracht ist.

4. Zellengehäuse (3) nach einem der vorstehenden Ansprüche, **dadurch gekennzeichnet, dass**
die metallische Beschichtung (50) Aluminium und/oder Zink enthält.

5. Batteriezelle (2), umfassend ein Zellengehäuse (3) nach einem der vorstehenden Ansprüche.

6. Verfahren zur Herstellung eines Zellengehäuses (3) für eine Batteriezelle (2), wobei
auf einen Grundkörper (52) mindestens eines ersten Gehäuseteils (61) und eines zweiten Gehäuseteils (62),
welche aus Kunststoff gefertigt sind,
zunächst eine metallische Beschichtung (50) aufgebracht wird, und anschließend die Gehäuseteile (61, 62) mittels Löten an Nahtstellen (70) miteinander verbunden werden.

7. Verfahren nach Anspruch 6, wobei
die metallische Beschichtung (50) mittels Bedampfen auf den Grundkörper (52) des ersten Gehäuseteils (61) und/oder des zweiten Gehäuseteils (62) aufgebracht wird.

8. Verfahren nach Anspruch 6, wobei
die metallische Beschichtung (50) mittels Lichtbogenspritzen auf den Grundkörper (52) des ersten Gehäuseteils (61) und/oder des zweiten Gehäuseteils (62) aufgebracht wird.

9. Verfahren nach Anspruch 6, wobei
die metallische Beschichtung (50) mittels eines galvanischen Prozesses auf den Grundkörper (52) des ersten Gehäuseteils (61) und/oder des zweiten Gehäuseteils (62) aufgebracht wird.

10. Verwendung der Batteriezelle (2) nach Anspruch 5 in einem Elektrofahrzeug (EV), in einem Hybridfahrzeug (HEV), in einem Plug-In-Hybridfahrzeug (PHEV) oder in einem Consumer-Elektronik-Produkt.
